# EUROPÄISCHE PATENTSCHRIFT

(11) **EP 2 024 162 B1**
(45) Veröffentlichungstag und Bekanntmachung des Hinweises auf die Patenterteilung: **12.05.2010**
(21) Anmeldenummer: 07723855.8
(22) Anmeldetag: 31.03.2007
(51) Int. Cl.: B29C 49/56, B29C 33/20, B29C 49/04

(54) **SCHLIESSVORRICHTUNG ZUM ÖFFNEN UND SCHLIESSEN EINES BLASFORMWERKZEUGES MIT RIEGELBARER SCHLIESSKRAFTABSTÜTZUNG**
CLOSING DEVICE FOR OPENING AND CLOSING A BLOW MOULD WITH LOCKABLE CLAMPING FORCE SUPPORT
DISPOSITIF DE FERMETURE POUR OUVRIR ET FERMER UN OUTIL DE MOULAGE PAR SOUFFLAGE AVEC ASSISTANCE VERROUILLABLE DE LA FORCE DE FERMETURE

(30) Priorität: 19.05.2006 DE 102006023905
(43) Veröffentlichungstag der Anmeldung: 18.02.2009
(73) Patentinhaber: EXTRAPLAST Maschinen GmbH, 53842 Troisdorf / Spich (DE)
(72) Erfinder: FORSBACH, Heinz-Peter, 53797 Lohmar (DE); STOCKSIEFEN, Raimund, 53844 Troisdorf (DE)
(74) Vertreter: Fritz & Brandenburg Patentanwälte
(86) Internationale Anmeldenummer: PCT/EP2007/002914
(87) Internationale Veröffentlichungsnummer: WO 2007/134668

(56) Entgegenhaltungen:
- EP-A- 0 730 941
- EP-A- 0 993 928
- DE-A1- 2 100 868
- DE-A1- 2 542 015
- US-A- 3 964 852

## Beschreibung

Die vorliegende Erfindung betrifft eine Schließvorrichtung mit riegelbarer Schließkraftabstützung, wobei die bei dem Schließvorgang auftretenden Gegenkräfte durch die Schließkraftabstützung aufgefangen werden. Die riegelbare Schließkraftabstützung erlaubt den Einsatz von erhöhten Schließkräften, bei gleichzeitig freiem Zugang zum Blasformwerkzeug.

Schließvorrichtungen für die Blasformtechnik sind im Grundsatz bekannt. Derartige Vorrichtungen umfassen zwei verfahrbare Formaufspannplatten, auf denen jeweils eine Hälfte eines Blasformwerkzeuges mit eingearbeiteten Formnestern aufgespannt ist (siehe z. B. das Dokument EP 0 993 928 A2).

Zur Formung eines dreidimensionalen Hohlkörpers wird ein sogenannter Vorformling in den Bereich des Formnestes gebracht, die Formhälften zusammengefügt und somit ein geschlossener Hohlraum gebildet. Im Weiteren wird dann der Vorformling ausgeblasen, wobei er die äußere Kontur annimmt, welche durch die Ausgestaltung der Formnester vorgegeben ist.

Während des Ausblasvorgangs wird die Schließvorrichtung mit Kräften von einigen 100 bis weit über 1000 KN geschlossen. In der Regel werden hierzu hydraulische Druckzylinder verwendet. Dabei ist wesentlich, dass mit zunehmender Größe des herzustellenden dreidimensionalen Hohlkörpers die auf die Schließvorrichtung notwendiger Weise wirkenden Schließkräfte ebenfalls ansteigen. Daraus folgt zwangsläufig, dass die den Schließkräften entgegengesetzt wirkenden Gegenkräfte ebenfalls ansteigen. Die zuletzt genannten Gegenkräfte müssen durch geeignete Maßnahmen abgefangen werden.

So ist es im Stande der Technik bekannt, Schließkräfte durch sogenannte C-Rahmen aufzufangen. Ein C-Rahmen umfasst einen Rahmenunterzug sowie an den Enden des Rahmensunterzuges angebrachte Seitenstützen. Die Blasformeinrichtung mit ihren formgebenden Einrichtungen, wie beispielsweise den Formhälften sowie den kraftbildenden Einrichtungen wie beispielsweise den Schließzylindern sind auf dem Rahmenunterzug und zwischen den Seitenstützen angeordnet. Im Schließvorgang stützen sich die Schließzylinder an den Seitenstützen ab, die die bei dem Formbildungsvorgang notwendigen Schließkräfte aufnehmen. Derartige C-Rahmen weisen den Vorteil auf, dass sie, insbesondere bei liegenden Blasformeinrichtungen, d.h. Blasformeinrichtungen mit stehenden Formhälften nur geringe Bauhöhen aufweisen.

Nachteilig an C-Rahmen ist die begrenzte Befähigung zur Aufnahme der Gegenkräfte. Hohe Schließkräfte ziehen eine massive Verstärkung des Rahmens nach sich, was sich im hohen Gewicht der Schließvorrichtung bemerkbar macht.

Insbesondere zeigen C-Rahmen eine elastische Verformung im Schließvorgang, was konstruktiv bei der Erstellung der Blasformeinrichtung berücksichtigt werden muss.

Bei der Verwendung von hohen Schließkräften, insbesondere zur Herstellung großer dreidimensionaler Hohlkörper ist es im Stande der Technik ebenfalls bekannt sogenannte Kastenrahmen zu verwenden. Ein Kastenrahmen weist sowohl einen Rahmenunterzug als auch einen Rahmenoberzug auf, welche durch Seitenstützen an ihren Enden verbunden sind. Derartige Kastenrahmen sind zur Aufnahme wesentlich größerer Gegenkräfte geeignet. Insbesondere zeigen Kastenrahmen eine wesentlich geringere Neigung zur elastischen Verformung. Nachteilig ist jedoch das höhere Gewicht eines Kastenrahmens der in der Regel ein Verfahren der Blasformeinrichtung erschwert. Des Weiteren behindert der Rahmenoberzug bei einer liegenden Blasformeinrichtung die Beschickung der Formnester, die Artikelentnahme nach dem Blasvorgang sowie jede Handhabung des Blaswerkzeuges.

Aufgabe der vorliegenden Erfindung ist es, eine Schließvorrichtung, insbesondere für den Blasformbereich bereitzustellen, die die Nachteile des Standes der Technik überwindet. Weitere Teilaufgabe der vorliegenden Erfindung ist es, eine Schließvorrichtung der zuvor genannten Art bereitzustellen, die ein geringes Gesamtgewicht, bedingt durch die Rahmenkonstruktion aufweist. Weitere Teilaufgabe der vorliegenden Erfindung ist es eine Schließvorrichtung der zuvor genannten Art bereitzustellen, bei der bei geöffnetem Blaswerkzeug die Formnester im Wesentlichen frei zugänglich sind.

Gelöst werden die Aufgaben nach den Merkmalen des unabhängigen Anspruches. Bevorzugte Ausführungsformen sind in den Unteransprüchen dargestellt.

Die vorliegende Erfindung geht von einer Schließevorrichtung mit einem C-Rahmen bekannter Art aus. Die Neuerung betrifft eine Schließkraftabstützung, umfassend wenigstens einen Riegelholm, vorzugsweise zwei Riegelholme zur Aufnahme der Gegenkräfte sowie geeigneter Holmaufnahmen.

Erfindungsgemäß ist der jeweilige Riegelholm zweigeteilt, wobei wenigstens einer der Holmabschnitte beweglich ausgeführt ist. In weiteren Ausführungsformen können beide Holmabschnitte beweglich ausgeführt werden, was nachfolgend noch erläutert wird. Weiterhin ist es erfindungswesentlich, dass die beiden Holmabschnitte mit einem Schloss miteinander kraftschlüssig verbunden werden können und somit den geschlossenen Riegelholm bilden. Vorzugsweise kann dabei das Schloss kraftlos betätigt werden. Soweit die Erfindung nachfolgend anhand einer Schließkraftabstützung mit einem Riegelholm erläutert wird, so versteht es sich, dass sich die Ausführungen auch auf Ausführungsformen beziehen, bei denen die Schließkraftabstützung mit zwei, drei, vier oder mehr Riegelholmen versehen ist.

Nach dem Grundgedanken der vorliegenden Erfindung bildet die Schließkraftabstützung mit ihrem Riegelholm in geschlossener Form beim Schließkraftaufbau einen geschlossenen Rahmen, ähnlich einem Kastenrahmen, um die Gegenkräfte aufzunehmen. Es liegt auf der Hand, dass eine mit der erfindungsgemäßen Schließkraftabstützung versehene Schließvorrichtung mit deutlich höheren Kräften betrieben werden kann, als dies ohne Schließkraftabstützung möglich wäre. Nach dem Blasvorgang wird der Holm der Schließkraftabstützung entkoppelt und wenigstens teilweise aus dem Bereich des Blaswerkzeuges weg bewegt. Geeigneter Weise kann dies durch das wenigstens teilweise Wegziehen eines der Holmabschnitte parallel zu der Arbeitsrichtung der Schließe geschehen. Nach dem Öffnen der Schließkraftabstützung sind die geöffneten Blasformhälften frei zugänglich. Die erfindungsgemäße Schließkraftabstützung kombiniert damit in vorteilhafter Weise die Vorteile eines C- Rahmens mit dem eines Kastenrahmens.

Die Vorteile und Ausführungen der vorliegenden Erfindung werden nachfolgend anhand der Figuren erläutert. Die Figuren stellen eine bevorzugte Ausführungsform der erfindungsgemäßen Schließkraftabstützung dar, sind jedoch nicht beschränkend für den Grundgedanken der Erfindung.
Figur 1 zeigt eine liegende Schließvorrichtung mit C-Rahmen und Schließkraftabstützung in geöffneter Stellung.
Figur 2 zeigt eine Schließvorrichtung nach Figur 1, mit geschlossener Schließkraftabstützung und geöffnetem Blaswerkzeug.
Figur 3 zeigt eine Schließvorrichtung nach Figur 1, mit geschlossener Schließkraftabstützung und geschlossenem Blaswerkzeug.
Figur 4 zeigt eine bevorzugte Ausführungsform für ein geeignetes Schloss.

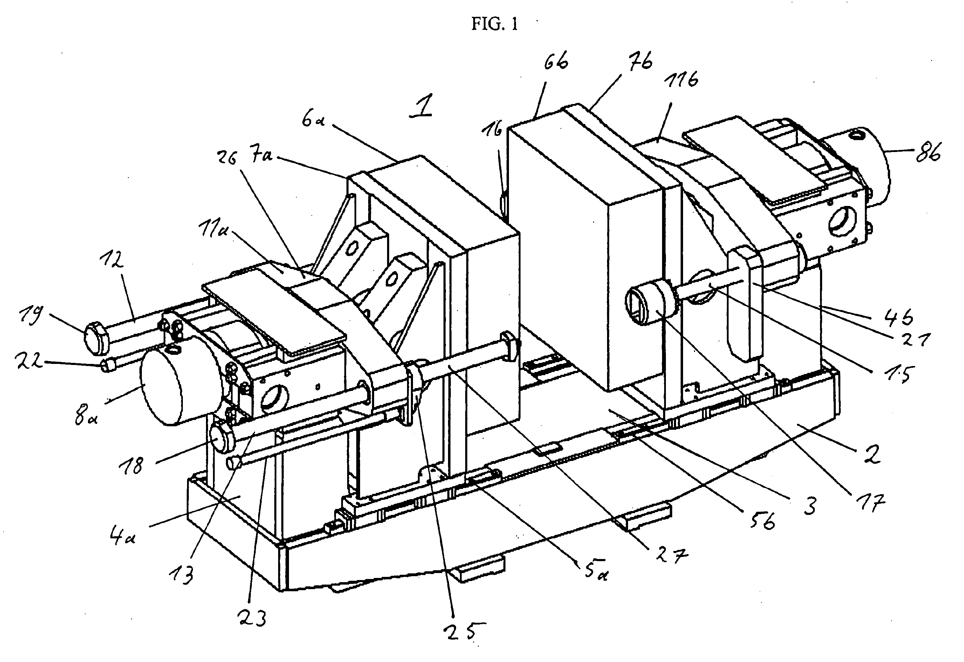

Figur 1 zeigt eine Schließvorrichtung 1 mit der erfindungsgemäßen Schließkraftabstützung in ihrer bevorzugten Ausführungsform mit zwei Riegelholmen 27.

Die Schließvorrichtung 1 ist in der dargestellten Ausführungsform als liegende Einheit ausgeführt und umfasst die bekannten Baugruppen eines Grundgestells 2, aufnehmend die Linearführungen 5a, 5b und die montierten Formaufspannplatten 7a, 7b. Darin liegend ist der elastische C - Rahmen angeordnet, bestehend aus dem Rahmenunterzug 3 sowie den Seitenstützen 4a, 4b. Erfindungsgemäß kann im Folgenden die Eigenelastizität des C-Rahmens ausgenutzt werden und/oder diese mittels geeigneter Maßnahmen unterstützt oder hergestellt werden. Derartige geeignete Maßnahmen sind beispielsweise die Anordnung elastischer Aufhängungen der Schließzylinder oder der Einsatz von sogenannten Federpaketen.

Die Formaufspannplatten 7a, 7b tragen die Blasformhälften 6a, 6b. In den Formhälften 6a, 6b sind in bekannter Weise die Formnester (nicht gezeigt) eingebracht. Die Formhälften 6a, 6b bilden gemeinsam das Blaswerkzeug. Die Linearführungen 5a, 5b sind in der Längserstreckung des Grundgestells 2 beweglich angeordnet. Geeigneter Weise kann die Bewegung mit einer handelsüblichen, kugelgelagerten Linearführung ermöglicht werden. Die damit gebildete Bewegungsrichtung wird nachfolgend auch Arbeitsrichtung genannt.

An den Seitenstützen 4a, 4b sind die hydraulischen Schließzylinder 8a, 8b angeordnet. Aus zeichnerischen Gründen sind Zuleitungen und Hilfsaggregate nicht dargestellt. Die Schließkraftabstützung umfasst in ihrer einfachsten Ausführungsform je eine Holmaufnahme zur Aufnahme der Gegenkräfte des Schließzylinders. Erfindungswesentlich ist dabei, dass die Holmaufnahme kraftschlüssig mit dem Schließzylinder, bzw. den Schließzylinder haltenden Baugruppen verbunden ist. In der dargestellten Ausführungsform nach Figur 1 ist die Holmaufnahme als Joch 11a, 11b ausgeführt.

Es ergibt sich, dass die Holmaufnahme, unabhängig von ihrer Ausführungsart und der Anzahl der getragenen Riegelholme, so ausgeführt sein muss, dass wenigstens ein Riegelholm 27 hinreichend von dem Unterzug 3 des C-Rahmens beabstandet sein muss, um die notwendige Kraftabstützung zu gewährleisten. Dem Fachmann ist ohne Weiteres klar, dass er den zuvor genannten Abstand in Abhängigkeit der abzustützenden Kräfte sowie der mechanischen Ausführung, zum Beispiel die Stärke der Riegelholme, wählen kann. Ein geeigneter Abstand zwischen dem Rahmenunterzug 2 und dem wenigstens einen Riegelholm 27 wird durch den Abstand des Rahmenunterzuges 3 und der Mittelachse der Schließzylinder 8a, 8b definiert, wobei die Riegelholme 27 von dem Rahmenunterzug 3 zumindest den gleichen Abstand aufweisen sollten. Ein größerer Abstand kann ohne Weiteres in Abhängigkeit der jeweiligen weiteren Gegebenheiten gewählt werden.

Die dargestellte Ausführungsform mit der Holmaufnahme 11a, 11b als Joch ist besonders bevorzugt. In dieser Ausführungsform ist die Schließvorrichtung jederzeit von oben zugänglich, so dass ein über der Vorrichtung angeordneter Schlauchkopf (nicht gezeigt) unmittelbar bis über die Schließe geführt werden kann. Die Holmaufnahme 11a, 11b ist dabei so ausgeführt, dass die nachfolgend noch zu erläuternden Holme soweit aus dem Fahrweg der Formhälften beabstandet sind, dass der Betrieb der Formhälften ohne Einschränkung möglich ist.

Daneben sind auch Ausführungsformen möglich, in denen ein Holm außermittig oberhalb der Schließvorrichtung geführt wird. Wie bereits ausgeführt sind die Holme zweigeteilt ausgeführt. Die dargestellte Ausführungsform weist einen beweglichen Holmabschnitt 13 auf, welcher in Längsrichtung durch die Holmaufnahme 11a beweglich geführt wird. Die Bewegung erfolgt parallel zur Arbeitsrichtung der Schließvorrichtung. Geeigneter Weise erfolgt die Bewegung des Holmabschnittes 13 mittels eines geeigneten Holmantriebes 25. Entsprechendes gilt für den beweglichen Holmabschnitt 12.

Gezeigt ist ein hydraulischer Antrieb. Die Art des Holmantriebes 25 kann frei gewählt werden. So sind pneumatische, elektrische oder anders geartete Antriebe auch geeignet, soweit das Verfahren des Holmabschnittes 13 damit bewirkt werden kann. Gegenüberliegend ist der Holmabschnitt 15 angeordnet. Nach Einfahren des Holmabschnittes 13 in die Schließstellung wird unter Wirkung des Schlosses 17 mit dem Holmabschnitt 15 die Schließkraftabstützung gebildet. Zum Zwecke der Beschreibung wird der Holmabschnitt 15 nachfolgend Gegenholmabschnitt genannt. Aus zeichnerischen Gründen ist der dem beweglichen Holmabschnitt 12 zugeordnete Gegenholmabschnitt 14 und Schloss 16 nicht sichtbar.

In weiteren Ausführungsformen kann der Gegenholmabschnitt 15 ebenfalls als ein-, und ausfahrbarer Holmabschnitt ausgebildet sein. Ebenfalls ist es möglich den Gegenholmabschnitt 15 dergestalt zu verkürzen, dass das Schloss 17 praktisch gänzlich auf der Schlossbetätigungseinrichtung 21 angeordnet ist.

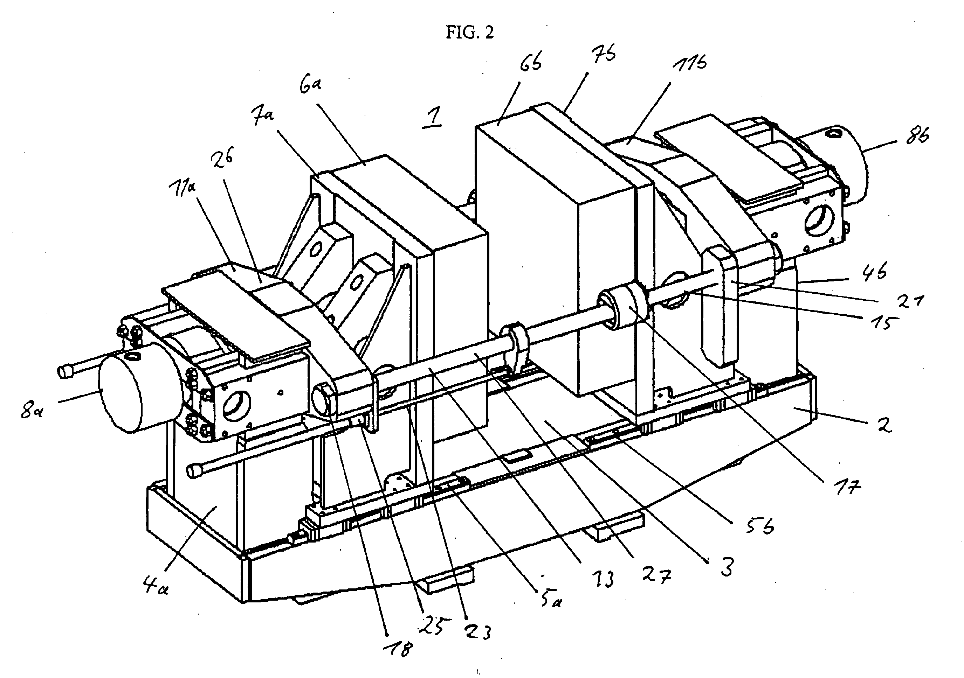

Übergehend zu Figur 2 werden Funktion und Baugruppen der erfindungsgemäßen Vorrichtung weiter erläutert. Zu Einleiten des Schließvorganges der Schließe wird mittels der Schubstange 23 des Holmantriebes 25 der bewegliche Holmabschnitt 13 in die Schließstellung eingefahren. Unter Schließstellung im Sinne der vorliegenden Beschreibung ist dabei der Eingriff der korrespondierenden Holmabschnitte mit dem zugehörigen Schloss zu verstehen. Die Einfahrbewegung des beweglichen Holmabschnittes13 wird durch den Anschlag 18 begrenzt. Anschlag 18 dient im Weiteren ebenfalls zur Kraftaufnahme, bzw. Kraftübertragung vom Holm 13 auf die Holmaufnahme 11a.

Der Gegenholmabschnitt 15 ist in der dargestellten Ausführungsform nicht verfahrbar und kraftschlüssig mit der Holmaufnahme 11 b verbunden. Nach vollständigem Einfahren des beweglichen Holmabschnittes 13 kann das Schloss 17 verriegelt werden. Die Darstellung zeigt ein besonders geeignetes Ankerschloss, das im Nachfolgenden noch weitergehend erläutert wird. Die Verriegelung erfolgt durch Drehen des Gegenholmabschnittes 15 um 90°, unter Wirkung der Schlossbetätigungseinrichtung 21. Alternativ kann auch in einer nicht dargestellten Ausführungsform der verschiebbare Holmabschnitt 13 gedreht werden, um den Verschluss zu bilden.

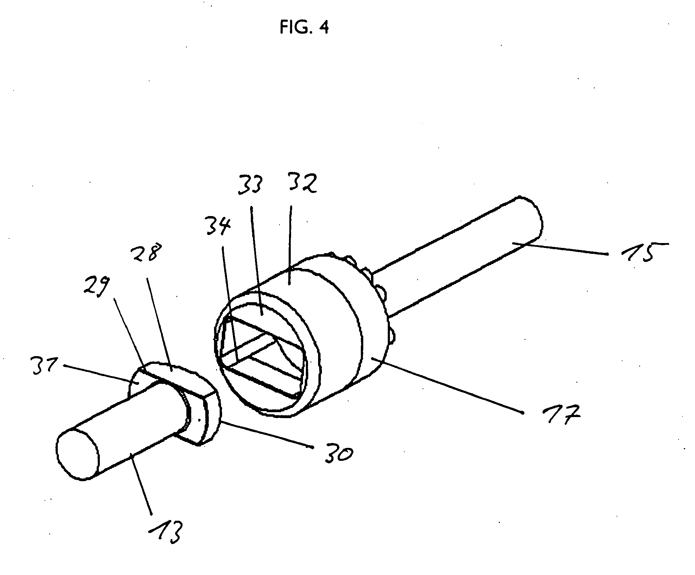

Übergehend zu Figur 4 wird die besonders geeignete Ausführungsform eines Schlosses 17 näher erläutert. Die dargestellte Ausführungsform zeigt ein Ankerschloss.

Als Ankerschloss im Sinne der vorliegenden Erfindung wird eine Verriegefungseinrichtung verstanden, bei der auf dem einen Kopfende eines Holmes 13 ein Anker 28 mit einem Querelement 30 angeordnet ist. Das Querelement 30 ist länglich ausgeführt und weist holmenseitig auf den Flügeln 29 jeweils eine plane Fläche 31 auf. Das korrespondierende Schließelement ist auf dem gegenüberliegenden Ende des anderen Holmabschnittes 14 angeordnet und umfasst einen Hohlkörper 32 mit einer Stirnfläche 33, wobei die Stirnfläche einen Schlitz 34 aufweist, der so dimensioniert ist, dass das Querelement 30 in den Hohlkörper eingeführt werden kann.

Auf der Innenseite des Hohlkörpers 32 ist die Stirnfläche 33 plan ausgeführt, so dass nach einem gegenseitigen Verdrehen des Querelementes 30 zu dem Hohlkörper 32 die Flügel 29 des Querelementes 30 die Stirnflächen 33 des Hohlkörpers 32 hinterschneiden. Geeigneterweise sind die planen Rückflächen 31 des Querelementes 30 sowie der Rückseite der Stirnfläche 33 des Hohlkörpers 32 so ausgebildet, dass diese planparallel zueinander angeordnet sind. Die genannten planparallelen Flächen bilden die Auflagenflächen zur Abstützung der Kräfte. In einer bevorzugten Ausführungsform weisen die Auflagenflächen des Schlosses 17 ein Spaltmaß im Bereich von ca. 0.5 mm bis 3 mm, bevorzugt ca. 1 mm, auf, soweit das Schloss 17 verriegelt aber nicht belastet ist. Das zuvor beschriebene und erfindungsgemäß bevorzugte Schloss 17 ermöglicht ein kraftloses Verschließen des Schlosses, insbesondere soweit sich die jeweiligen planen Flächen nicht berühren. In einer weiteren Ausführungsform kann das Schloss 17 so ausgeführt sein, dass die Auflageflächen mit einer geeigneten Steigung versehen werden, so dass nach Eindrehen des Ankers 28 die Auflageflächen miteinander kontaktieren. In der zuletzt genannten Ausführungsform macht das Schloss jedoch keinen Gebrauch von dem Vorteil des nachfolgend noch erläuterten, kraftbündigen Verschlusses des Schlosses 17 in Folge des Schließkraftaufbaus.

Es versteht sich, dass die Zuordnung des Ankers 28 sowie des Hohlkörpers 32 zu den jeweiligen Holmabschnitten beliebig gewählt werden kann. Die zuvor gemachten Ausführungen sind dementsprechend beispielhaft und nicht beschränkend. Ebenso versteht sich für den Fachmann weiterhin, dass im Rahmen der vorliegenden Erfindung auch geeignete weitere Schlossformen wie Hakenschlösser oder Krallenschlösser Verwendung finden können.

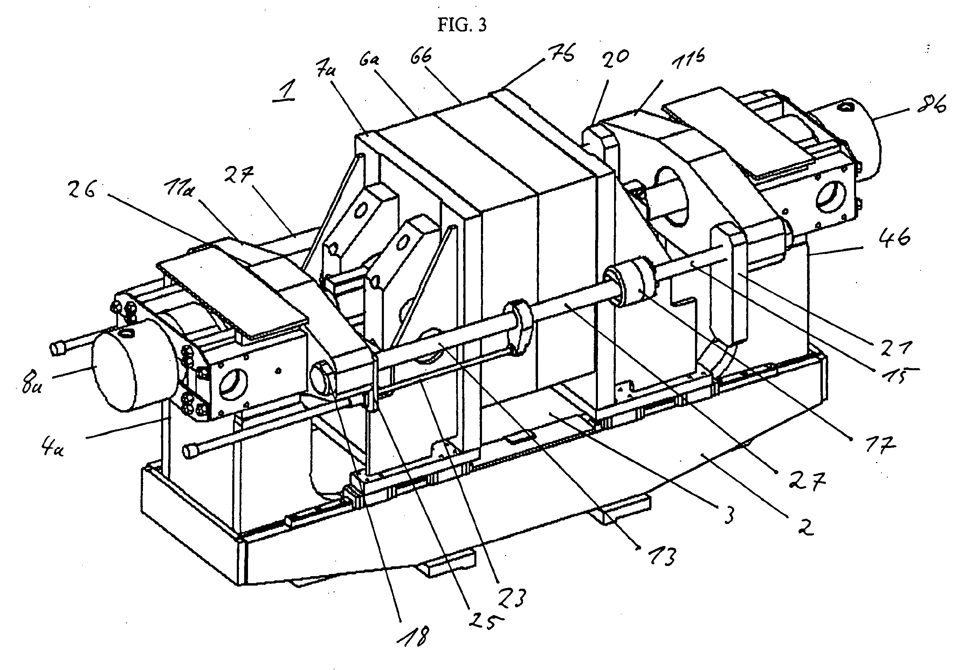

Übergehend zu Figur 3, darstellend eine Schließvorrichtung mit geschlossener Form und verriegelter Schließkraftabstützung, wird die Erfindung weiter erläutert. Wie aus der Figur ersichtlich bildet die erfindungsgemäße Schließkraftabstützung einen oberen Rahmen, der die Gegenkräfte aufnimmt und höhere Schließkräfte für die Schließvorrichtung, bewirkt durch die Schließzylinder 8a 8b ermöglicht.

Hier kommt ein weiterer Kunstgriff der Erfindung zum Tragen. In einer bevorzugten Ausführungsform der Erfindung kann eine definierte elastische Verformung des C-Rahmens infolge des Schließkraftaufbaues zum kraftbündigen Verschluss des Schlosses 17 eingesetzt werden.

In dieser Ausführungsform werden unter Wirkung der Gegenkräfte die Seitenstützen 4a, 4b auseinandergetrieben, wobei es zu der elastischen Verformung des C-Rahmens kommt. Die Aufweitung erfolgt so weit, bis die Spaltmaße zwischen den planparallelen Flächen des Ankerschlosses überbrückt sind und diese kraftschlüssig in Verbindung treten. Das verriegelte Schloss ist damit verschlossen. Erfindungsgemäß wird zwischen einem unbelasteten, aber geschlossenen Schloss unterschieden, das als verriegeltes Schloss bezeichnet wird und einem belasteten Schloss, das als geschlossenes Schloss bezeichnet wird. Die Gegenkräfte werden jetzt durch den Holmabschnitt 13, den Gegenholmabschnitt 15, verbunden durch das Schloss 17 aufgenommen und über den Anschlag 18 auf die Holmaufnahme 11 a bzw. 11b übertragen. Ein weitergehendes Aufweiten des C-Rahmens aufgrund elastischer Verformung findet nicht statt.

Hieraus ergeben sich mehrere Vorteile. Zum einen kann das Schloss 17 kraftlos ineinander geführt und in Riegelstellung gebracht werden, ohne unmittelbaren Kontakt der jeweiligen Baugruppen. Dies führt zu einer erhöhten Betriebsfestigkeit des Schlosses, insbesondere da keinerlei aufeinander gleitende Flächen vorhanden sind. Weiterhin kommt es zu keinem oder nur geringem Verschleiß an den Auflageflächen.

Ebenso erfolgt nur eine geringe und definierte elastische Aufweitung des C-Rahmens und dem damit verbundenen Beanspruchung desselben.

Es zeigte sich, dass mittels der erfindungsgemäßen Schließkraftabstützung bei ansonsten baugleichen Schließenvorrichtungen mit einem C-Rahmen, Schließkräfte aufgebracht werden können, die unabhängig von umgebenden Konstruktion, nur durch die Auslegung des verriegelbaren Kraftrahmens begrenzt sind. Gleichzeitig ist der Gewichtszuwachs durch die erfindungsgemäße Schließkraftabstützung nur geringfügig, wodurch es möglich ist, die Schließvorrichtung weiterhin als mobile Einheit einzusetzen, beispielsweise um mehrere Vorrichtungen im Produktionstakt unter einen einzelnen Schlauchkopf wechselweise zu verfahren.

Ein weiterer Vorteil der vorliegenden Erfindung besteht darin, dass die Betätigung des Blasformwerkzeuges von der riegelbaren Schließkraftabstützung entkoppelt werden kann. So kann der Arbeitstakt der Formenschließe 1 soweit von dem jeweiligen Arbeitstakt der Schließkraftabstützung, d.h. dem Verriegeln und Entriegeln sowie Ausfahren der beweglichen Holme, entkoppelt werden, wie die jeweiligen Produktionsbedingungen dies erfordern. Erfindungswesentlich ist dabei alleine, dass zum Zeitpunkt des Kraftaufbaus der Formenschließe die Verriegelung der Schließkraftabstützung erfolgt ist. Weiterhin ergibt es sich dem Fachmann ohne Weiteres, dass für Produktionsabläufe, bei denen Schließkräfte Anwendung finden, die durch den Grundaufbau des C-Rahmens alleine abgestützt werden können, die Verriegelung der Schließkraftabstützung entfallen kann und diese unbetätigt in entriegelter und geöffneter Form verbleiben kann.

### Bezugszeichenliste

- 1.: Formenschließe
- 2.: Grundgestell
- 3.: Rahmenunterzug
- 4a, 4b.: Seitenstützen
- 5a, 5b.: Linearführungen
- 6a, 6b.: Blasformhälften
- 7a, 7b.: Formaufspannplatten
- 8a, 8b.: Schließzylinder
- 11a, 11b.: Holmaufnahme
- 12, 13.: beweglicher Holmabschnitt
- 14, 15.: Gegenholmabschnitt
- 16, 17.: Schloss
- 18, 19.: Anschlag
- 20, 21.: Schlossbetätigungseinrichtung
- 22, 23.: Schubstange
- 25.: Holmantrieb
- 26.: Schließkraftabstützung
- 27.: Riegelholm
- 28.: Anker
- 29.: Flügel
- 30.: Querelement
- 31.: Plane Fläche
- 32.: Hohlkörper
- 33.: Stirnfläche
- 34.: Schlitz

## Patentansprüche

1. Schließvorrichtung für ein Blasformwerkzeug
umfassend ein Grundgestell (2),
welches Linearführungen (5a, 5b) aufnimmt,
die in der Längserstreckung des Grundgestells (2) beweglich angeordnet sind und an denen die Formaufspannplatten (7a, 7b) montiert sind,
welche wiederum die beiden Blasformhälften (6a, 6b) tragen,
wobei eine Schließkraftabstützung vorgesehen ist,
umfassend jeweils eine Holmaufnahme (11 a, 11 b),
die kraftschlüssig verbunden ist mit jeweiligen Schließzylindern (8a, 8b),
wobei die Holmaufnahmen (11 a, 11b) durch wenigstens einen Riegelholm (27) verbunden sind,
wobei der Riegelholm (27) aus einem Holmabschnitt (13) und einem Gegenholmabschnitt (15) besteht
und wenigstens einer der Holmabschnitte beweglich angeordnet ist und wobei die Holmabschnitte in Schließstellung mit einem Schloss (17) verbindbar sind,
**dadurch gekennzeichnet, dass** in den Linearführungen liegend ein C-Rahmen angeordnet ist, bestehend aus einem Rahmenunterzug (3) sowie den Seitenstützen (4a, 4b) und dass die Schließzylinder (8a, 8b) an den Seitenstützen angeordnet sind.

2. Schließvorrichtung für ein Blasformwerkzeug nach Anspruch 1,
**dadurch gekennzeichnet, dass** in geschlossener Form der Schließvorrichtung bei verriegelter Schließkraftabstützung diese Schließkraftabstützung einen oberen Rahmen bildet, der die Gegenkräfte aufnimmt.

3. Schließvorrichtung für ein Blasformwerkzeug nach Anspruch 1, **dadurch gekennzeichnet, dass** durch Einfahren des beweglichen Holmabschnitts (13) in die Schließstellung bei geöffnetem Blaswerkzeug (6a, 6b) das Schloss (17) verriegelbar und eine geschlossene Schließkraftabstützung gebildet wird.

4. Schließvorrichtung nach einem der Ansprüche 1 bis 3, **dadurch gekennzeichnet, dass** bei geschlossenem Blaswerkzeug (6a, 6b) und geschlossener Schließkraftabstützung unter Wirkung der Gegenkräfte die Seitenstützen (4a, 4b) auseinandergetrieben werden und eine elastische Verformung des C-Rahmens erfolgt mit einer Aufweitung des C-Rahmens so weit, bis die Spaltmaße zwischen planparallelen Flächen des als Ankerschloss ausgebildeten Schlosses (17) überbrückt sind und diese kraftschlüssig in Verbindung treten.

5. Schließvorrichtung nach Anspruch 4, **dadurch gekennzeichnet, dass** die Auflageflächen des Ankerschlosses in verriegeltem aber unbelastetem Zustand mit einem Spaltmaß versehen sind, insbesondere mit einem Spaltmaß von 0,5 bis 3 mm, bevorzugt 1 mm.

6. Schließvorrichtung nach Anspruch 4 oder 5, **dadurch gekennzeichnet, dass** das Ankerschloss durch Drehen der Holmabschnitte (12. 13) und/oder Gegenholmabschnitte (14, 15) verriegelbar ist.

7. Schließvorrichtung nach einem der Ansprüche 4 bis 6, **dadurch gekennzeichnet, dass** als Verrieglungseinrichtung ein Ankerschloss dient mit einem auf dem einen Kopfende eines Holmes (13) angeordneten Anker (28) mit einem Querelement (30), welches länglich ausgebildet ist und holmenseitig auf Flügeln (29) jeweils eine plane Fläche (31) aufweist, wobei das korrespondierende Schließelement auf dem gegenüberliegenden Ende des anderen Holmabschnitts 814) angeordnet ist und einen Hohlkörper (32) mit einer Stirnfläche (33) umfasst, wobei diese Stirnfläche einen Schlitz (34) aufweist, der so dimensioniert ist, dass das Querelement (30) in den Hohlkörper (32) eingeführt werden kann, wobei auf der Innenseite des Hohlkörpers eine Stirnfläche (33) plan ausgeführt ist, so dass nach einem gegenseitigen Verdrehen des Querelementes (30) zu dem Hohlkörper (32) die Flügel (29) des Querelementes die Stirnflächen des Hohlkörpers hinterschneiden.

8. Schließvorrichtung nach einem der vorhergehenden Ansprüche, **dadurch gekennzeichnet, dass** der bewegliche Holmabschnitt (12, 13) mit jeweils einem Holmantrieb (25) versehen ist, wobei der bewegliche Holmabschnitt (12, 13) in Arbeitsrichtung der Schließe verfahrbar ist.

9. Schließvorrichtung nach einem der vorhergehenden Ansprüche, **dadurch gekennzeichnet, dass** der Abstand der Riegelholme zum Rahmenunterzug (3) gleich oder größer ist als der Abstand zwischen dem Rahmenunterzug (3) und der Mittelachse der Schließzylinder (8a, 8b).

10. Schließvorrichtung nach einem der vorhergehenden Ansprüche, **dadurch gekennzeichnet, dass** die Schließkraftabstützung unabhängig von der Formenschließe betätigbar ist.

## Claims

1. A closing apparatus for a blow mould tool incorporating a base frame (2) for receiving linear guides (5a, 5b) which are movably disposed in the longitudinal extension of said base frame (2) and to which the mould clamping plates (7a, 7b) are mounted, said mould clamping plates in turn carrying the two halves of the blow mould (6a, 6b), there being provided a closing force abutment device each incorporating a bar receiving receptacle (11a, 11b) which is frictionally connected to respective closing cylinders (8a, 8b), said bar receiving receptacles (11a, 11b) being connected by at least one lock bar (27), said lock bar (27) consisting of a bar portion (13) and of a mating bar portion (15) and at least one of said bar portions (13) being disposed movably and said bar portions being connectable to a lock (17) in the closed position,
**characterized in that** a C frame consisting of a frame beam (3) and of the side posts (4a, 4b) is disposed so as to lie in the linear guides and that said closing cylinders (8a, 8b) are disposed at the side posts.

2. The closing device for a blow mould tool as set forth in claim 1, **characterized in that**, in the closed form of the closing device, when the closing force abutment device is locked, said closing force abutment device forms an upper frame which takes the counter forces.

3. The closing device for a blow mould tool as set forth in claim 1, **characterized in that**, by retracting the movable bar portion (13) into the closed position when the blow tool (6a, 6b) is open, the lock (17) is lockable and a closed closing force abutment device is formed.

4. The closing device as set forth in any one of the claims 1 through 3, **characterized in that**, when the blow tool (6a, 6b) and the closing force abutment device are closed, the side posts (4a, 4b) are driven apart under the action of the counter forces and that elastic deformation of the C frame occurs with the C frame widening to such an extent that the gap dimensions between planar parallel surfaces of the lock (17), which is configured as an anchor lock, are bridged and enter into frictional contact.

5. The closing device for a blow mould tool as set forth in claim 4, **characterized in that** the resting surfaces of the anchor lock are provided with a gap dimension, in particular with a gap dimension of 0.5 through 3 mm, preferably of 1 mm, in the locked but unloaded condition.

6. The closing device for a blow mould tool as set forth in claim 4 or 5, **characterized in that** the anchor lock is lockable by turning the bar portions (12, 13) and/or the mating bar portions (14, 15).

7. The closing device as set forth in any one of the claims 4 through 6, **characterized in that** an anchor lock serves as a locking mechanism with an anchor (28) disposed on the one top end of a bar (13), said anchor having a transverse element (30) that is configured to be elongate and that comprises on wings (29), on the side of the bar, a planar surface (31), the corresponding closing element being disposed on the opposite end of the other bar portion (14) and incorporating a hollow body with an end surface (33), said end surface comprising a slot (34) that is dimensioned such that said transverse element (30) is adapted to be introduced into said hollow body (32), an end surface (33) being configured to be planar on the inner side of the hollow body so that, upon mutual rotation of the transverse element (30) with respect to the hollow body (32), the wings (29) of the transverse element undercut the end surfaces of the hollow body.

8. The closing device as set forth in any one of the previous claims, **characterized in that** the movable bar portion (12, 13) is provided with a respective bar drive (25), said movable bar portion (12, 13) being displaceable in the working direction of the closure.

9. The closing device as set forth in any one of the previous claims, **characterized in that** the distance between the lock bars and the frame beam (3) is the same or greater than the distance between the frame beam (3) and the central axis of the closing cylinders (8a, 8b).

10. The closing device as set forth in any one of the previous claims, **characterized in that** the closing force abutment device is actuatable independent of the closure of the mould.

## Revendications

1. Dispositif de fermeture pour un outil de moulage par soufflage, comprenant un bâti (2) recevant des guides linéaires (5a, 5b) qui sont disposés de manière à être mobiles dans l'extension longitudinale dudit bâti (2) et sur lesquels sont montés les plateaux à serrer les moules (7a, 7b) qui, de leur coté, portent les deux demi-moules de soufflage (6a, 6b), un appui de force de fermeture étant prévu, comprenant respectivement un logement de barre (11a, 11b) qui est relié par adhérence à des cylindres de fermeture respectifs (8a, 8b), lesdits logements de barre (11a, 11b) étant reliés entre eux par au moins une barre de verrouillage (27), ladite barre de verrouillage (27) se composant d'une section de barre (13) et d'une contre-section de barre (15) et l'une au moins des sections de barre étant disposée de manière mobile et lesdites sections de barre pouvant être reliées, en position fermée, par une serrure (17), **caractérisé par le fait que**, couché dans lesdits guides linéaires, est disposé un cadre en C se composant d'un longeron de cadre (3) ainsi que des appuis latéraux (4a, 4b), et que lesdits cylindres de fermeture (8a, 8b) sont disposés sur les appuis latéraux.

2. Dispositif de fermeture pour un outil de moulage par soufflage selon la revendication 1, **caractérisé par le fait que**, en état fermé du dispositif de fermeture, lorsque l'appui de force de fermeture est verrouillé, cet appui de force de fermeture forme un cadre supérieur recevant les forces opposées.

3. Dispositif de fermeture pour un outil de moulage par soufflage selon la revendication 1, **caractérisé par le fait qu'**en déplaçant la portion de barre (13) mobile dans la position de fermeture, lorsque l'outil de soufflage est ouvert (6a, 6b), ladite serrure (17) peut être verrouillée et un appui fermé de force de fermeture est réalisé.

4. Dispositif de fermeture selon l'une quelconque des revendications 1 à 3, **caractérisé par le fait que**, lorsque l'outil de soufflage (6a, 6b) et ledit appui de force de fermeture sont fermés, les appuis latéraux (4a, 4b) sont écartés l'un de l'autre sous l'effet des forces opposées et une déformation élastique du cadre en C se produit, le cadre en C étant ainsi élargi jusqu'à ce que les écarts entre des faces planes et parallèles de la serrure (17) réalisée sous forme d'une serrure à ancre soient supprimés et que celles-ci entrent en contact par adhérence.

5. Dispositif de fermeture selon la revendication 4, **caractérisé par le fait que**, en état verrouillé mais non chargé, les surfaces d'appui de ladite serrure à ancre sont pourvues d'un écart, en particulier d'un écart compris entre 0,5 et 3 mm, de préférence de 1 mm.

6. Dispositif de fermeture selon la revendication 4 ou 5, **caractérisé par le fait que** ladite serrure à ancre peut être verrouillée en tournant les sections de barre (12, 13) et/ou les contre-sections de barre (14, 15).

7. Dispositif de fermeture selon l'une quelconque des revendications 4 à 6, **caractérisé par le fait qu'**une serrure à ancre fait office de dispositif de verrouillage, celle-ci comprend une ancre (28) ayant un élément transversal (30), qui est disposée sur l'un des bouts d'une barre (13), ledit élément transversal étant allongé et présentant du côté de la barre, sur des ailes (29), respectivement une surface plane (31), l'élément de fermeture correspondant étant disposé à l'extrémité opposée de l'autre section de barre (14) et comprenant un corps creux (32) avec une surface frontale (33), cette surface frontale (33) présentant une fente (34) qui est dimensionnée de manière à ce que ledit élément transversal (30) puisse être introduit dans le corps creux (32) ; sur la face interne dudit corps creux, une surface frontale (33) étant réalisée plane de sorte que, après une rotation mutuelle de l'élément transversal (30) par rapport au corps creux (32), les ailes (29) de l'élément transversal s'engagent derrière les surfaces frontales du corps creux.

8. Dispositif de fermeture selon l'une quelconque des revendications précédentes, **caractérisé par le fait que** la section de barre (12, 13) mobile est pourvue d'une commande de barre (25) respectivement, ladite section de barre (12, 13) mobile étant déplaçable dans la direction de travail de la fermeture.

9. Dispositif de fermeture selon l'une quelconque des revendications précédentes, **caractérisé par le fait que** la distance séparant les barres de verrouillage et ledit longeron de cadre (3) est égale ou supérieure à la distance existant entre le longeron de cadre (3) et l'axe médian des cylindres de fermeture (8a, 8b).

10. Dispositif de fermeture selon l'une quelconque des revendications précédentes, **caractérisé par le fait que** ledit appui de force de fermeture peut être actionné indépendamment de la fermeture des moules.
